# EUROPÄISCHE PATENTSCHRIFT

(11) **EP 1 215 219 B1**
(45) Veröffentlichungstag und Bekanntmachung des Hinweises auf die Patenterteilung: **25.08.2004**
(21) Anmeldenummer: 01128480.9
(22) Anmeldetag: 06.12.2001
(51) Int. Cl.: C08F 8/28, C08F 261/04, C08F 261/12

(54) **Polyvinylacetal-gepfropfte Polymerisate**
Polyvinyl acetal graft copolymers
Polymères greffés polyvinylacétal

(30) Priorität: 14.12.2000 DE 10062176
(43) Veröffentlichungstag der Anmeldung: 19.06.2002
(73) Patentinhaber: Wacker Polymer Systems GmbH & Co. KG, 84489 Burghausen (DE)
(72) Erfinder: Weitzel, Hans-Peter, Dr., 84571 Reischach (DE); Ball, Peter, Dr., 84547 Emmerting (DE); Tschirner, Peter, Dr., 84547 Emmerting (DE)
(74) Vertreter: Schuderer, Michael, Dr.

(56) Entgegenhaltungen:
- DD-A- 222 880
- DE-B- 1 202 982
- DE-C- 19 901 307
- US-A- 3 446 768
- US-A- 5 635 566

## Beschreibung

Die Erfindung betrifft Polyvinylacetal-gepfropfte Polymerisate in Form deren wässrigen Dispersionen oder in Wasser redispergierbaren Pulver, Verfahren zu deren Herstellung und deren Verwendung.

Mit Schutzkolloiden stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate, beispielsweise als zementäre Fliesenkleber, eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit (z.B. Haftzugswerte im Fliesenkleber) beiträgt. Probleme können aber bei der Herstellung und bei der Anwendung von mit Schutzkolloiden stabilisierten Polymerisaten auftreten. Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität). Polyvinylalkoholstabilisierte Polymerpulver sind beispielsweise in der EP-A 149098, in der EP-A 477900 und in der WO-A 99/16794 erwähnt. Derartige mit Polyvinylalkohol stabilisierte Polymerpulver zeigen zwar gutes Viskositäts- und Verarbeitungsverhalten in zementären Anwendungen, dennoch ist es in vielen Fällen erwünscht dieses Verhalten zu verbessern.

Vor allem sulfonatfunktionelle Polyvinylacetale sind als Schutzkolloide bei der Herstellung von wässrigen Polymerdispersionen bekannt. In der DE-A 3316948 werden sulfonatfunktionelle Polyvinylacetale beschrieben, bei denen bis zu 10 Mol-% der OH-Gruppen mit einem sulfonatfunktionellem Aldehyd acetalisiert sind. Die EP-A 655464 betrifft ein Verfahren zur Herstellung von mit Schutzkolloid stabilisierten Polymerdispersionen, wobei als Schutzkolloide Polyvinylacetale mit hohem Acetalisierungsgrad und bis zu 20 Mol-% Sulfonatgruppen eingesetzt werden.

Die EP-A 1020493 beschreibt ein Verfahren zur Herstellung von mit Schutzkolloiden stabilisierten Dispersionspulvern, wobei die zugrundeliegenden Polymerdispersionen mit Polyvinylalkohol als Schutzkolloid stabilisiert sind, und zu deren Trocknung teilacetalisierte Polyvinylalkohole als Verdüsungsschutzkolloid eingesetzt werden. Eine Verwendung dieser teilacetalisierten Polyvinylalkohole als Schutzkolloide in der Polymerisation wird ausgeschlossen, da diese bei niedrigem pH zersetzt werden sollen und bei hohen Temperaturen aus der wässrigen Lösung ausfallen. Die Verwendung von teilacetalisierten Polyvinylalkoholen als Schutzkolloide zur Herstellung von froststabilen, wässrigen Dispersionen ist aus der DE-B 1202982 bekannt. Dabei werden teilverseifte Polyvinylakohole oder Polyvinylacetale mit hohem Vinylacetat-Gehalt eingesetzt. Die DD-A 222880 beschreibt die Herstellung von Polyvinylacetaten mit verbesserter Wasserfestigkeit. Diese wird dadurch erhalten, dass man Vinylacetat in Gegenwart von mit Acetaldehyd acetalisiertem Polyvinylalkohol polymerisiert.

Der Erfindung lag die Aufgabe zugrunde, Polymerisate zur Verfügung zu stellen, die im Vergleich zu polyvinylalkoholstabilisierten Polymerisaten beim Einsatz in zementären Anwendungen eine verbesserte Viskositäts- bzw. Zementstabilität besitzen und das Zementabbinden nicht behindern.

Gegenstand der Erfindung sind Polyvinylacetal-gepfropfte Polymerisate in Form deren wässrigen Dispersionen oder in Wasser redispergierbaren Pulver auf der Basis von Emulsions- oder Suspensionspolymerisaten von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren, welche mit Polyvinylacetalen mit 0 bis 5.0 Mol-% Vinylacetateinheiten, 75 bis 95 Mol-% Vinylalkoholeinheiten, 0.1 bis 20 Mol-% Acetaleinheiten, welche sich von Aldehyden mit 3 bis 7 C-Atomen ableiten gepfropft sind.

Ein weiterer Gegenstand der Erfindung ist ein Verfahren zur Herstellung von Polyvinylacetal-gepfropften Polymerisaten in Form deren wässrigen Dispersionen oder in Wasser redispergierbaren Pulver mittels radikalisch initiierter Emulsions- oder Suspensionspolymerisation in wässrigem Medium von einem oder mehreren Monomeren aus der Gruppe umfassend Vinylester, (Meth)-acrylsäureester, Vinylaromaten, Olefine, 1,3-Diene und Vinylhalogenide und gegebenenfalls weiteren damit copolymerisierbaren Monomere in Gegenwart von einem oder mehreren Schutzkolloiden a) und gegebenenfalls Trocknung der damit erhaltenen Polymerdispersionen in Gegenwart von einem oder mehreren Verdüsungsschutzkolloiden b), wobei die Polymerisation bei einem pH-Wert von 5 bis 8 durchgeführt wird, und als Schutzkolloide a) teilacetalisierte Polyvinylalkohole eingesetzt werden mit 0 bis 5.0 Mol-% Vinylacetateinheiten, 75 bis 99 Mol-% Vinylalkoholeinheiten, 0.1 bis 20 Mol-% Acetaleinheiten, welche sich von Aldehyden mit 3 bis 7 C-Atomen ableiten, und mit einer Viskosität des zugrundeliegenden Polyvinylalkohols von 2 bis 30 mPas, und als Verdüsungsschutzkolloide b) von a) verschiedene Schutzkolloide eingesetzt werden.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Geeignete Monomere aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 5 Gew.-%, bezogen auf das Gesamtgewicht des Monomergemisches, Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxyund Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder-methacrylat sowie Verbindungen wie Diacetonacrylamid und Acetylacetoxyethylacrylat oder -methacrylat.

Besonders bevorzugt werden Monomere oder Gemische, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Am meisten bevorzugt werden Gemische von Vinylacetat mit Ethylen; von Vinylacetat, Ethylen und einem Vinylester von α-verzweigten Monocarbonsäuren mit 9 bis 11 C-Atomen; von n-Butylacrylat mit 2-Ethylhexylacrylat und/oder Methylmethacrylat; von Styrol mit einem oder mehreren Monomeren aus der Gruppe Methylacrylat, Ethylacrylat, Propylacrylat, n-Butylacrylat, 2-Ethylhexylacrylat; von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, dass im allgemeinen eine Glasübergängstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Geeignete Polyvinylacetale sind teilacetalisierte Polyvinylalkohole mit 0 bis 5 Mol-% Vinylacetateinheiten, 75 bis 99 Mol-%, vorzugsweise 80 bis 98 Mol-% Vinylalkoholeinheiten, und 0.1 bis 20 Mol-%, vorzugsweise 10 bis 20 Mol-%, besonders bevorzugt 11 bis 15 Mol-% Acetaleinheiten, welche sich jeweils von Aldehyden mit 3 bis 7 C-Atomen, vorzugsweise 4, 6 oder 7 C-Atomen ableiten. Beispiele für geeignete Aldehyde sind Propionaldehyd, Butyraldehyd, Pentanal und Hexanal sowie Gemische dieser Aldehyde untereinander oder Gemische dieser Aldehyde mit Acetaldehyd. Die Viskosität des dem Polyvinylacetal zugrundeliegenden Polyvinylalkohols beträgt 1 bis 30 mPas (DIN 53015, 4 %-ige wässrige Lösung, Methode nach Höppler bei 20°C).

Die Polyvinylacetale können nach bekannten Verfahren der Polyvinylacetalherstellung erzeugt werden. Bevorzugt wird die Acetalisierung eines teil- oder vollverseiften Polyvinylalkohols in wässriger Phase unter Säurekatalyse (Salzsäure, Schwefelsäure) bei erhöhter Temperatur (30°C bis 80°C). Das Polyvinylacetal wird vorzugsweise nicht isoliert, sondern direkt als wässrige Lösung für die Polymerisation verwendet. Als geeignete Ausgangspolyvinylalkohole haben sich hoch- und vollverseifte Polyvinylalkohole erwiesen, mit einem Hydrolysegrad von mehr als 75 Mol-%, vorzugsweise mehr als 90 Mol-%, die eine Viskosität von 1 bis 30 mPas (DIN 53015, 2 %-ige wässrige Lösung, Methode nach Höppler) aufweisen.

Die Herstellung der Pfropfpolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 80°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden. Die Polymerisation wird bei einem pH-Wert von 5 bis 8 durchgeführt.

Die Initiierung der Polymerisation erfolgt mit den für die Emulsionspolymerisation oder Suspensionspolymerisation gebräuchlichen wasserlöslichen bzw. monomerlöslichen Initiatoren oder Redoxinitiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid und Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Das aufzupfropfende Polyvinylacetal wird bei der Polymerisation als Schutzkolloid a) eingesetzt. Der Anteil an Polyvinylacetal-Schutzkolloid in der Polymerisation beträgt 3 bis 20 Gew.-%, bevorzugt 5 bis 15 Gew.-%, jeweils bezogen auf den Monomeranteil. Der Schutzkolloid-Anteil kann sowohl vollständig vorgelegt, als auch teilweise vorgelegt und teilweise zudosiert werden. Vorzugsweise werden mindestens 5 Gew.-% der Gesamtmenge an Schutzkolloid vorgelegt, am meisten bevorzugt wird der Schutzkolloid-Anteil vollständig vorgelegt. Gegebenenfalls können während der Polymerisation zusätzlich zum Polyvinylacetal-Schutzkolloid a) weitere Schutzkolloide b) eingesetzt werden, beispielsweise teilverseifte oder vollverseifte Polyvinylalkohole, wie etwa teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Vorzugsweise wird ohne Zusatz von weiteren Schutzkolloiden b) polymerisiert.

Bei dem erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Vorzugsweise wird so vorgegangen, daß 50 bis 100 Gew.-%, bezogen auf das Gesamtgewicht der Monomere vorgelegt wird und der Rest zudosiert wird. Die Dosierungen können separat (räumlich und zeitlich) durchgeführt werden oder die zu dosierenden Komponenten können alle oder teilweise voremulgiert dosiert werden.

Hilfsmonomere können abhängig von ihrer chemischen Natur ebenfalls vollständig vorgelegt oder dosiert werden. Auch teilweise Vorlage oder Dosierung ist möglich. Bei Vinylacetatpolymerisationen werden die Hilfsmonomere in Abhängkeit ihrer Copolymerisationsparameter dosiert oder vorgelegt. Acrylsäurederivate beispielsweise werden dosiert während Vinylsulfonat vorgelegt werden kann. Der Monomerumsatz wird mit der Initiatordosierung gesteuert. Die Initiatoren werden insgesamt zudosiert.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%. Zur Herstellung von in Wasser redispergierbaren Polymerpulver werden die wässrigen Dispersionen, nach Zusatz von Schutzkolloid b) (Verdüsungsschutzkolloid), getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Geeignete Schutzkolloide b) sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

In der Regel wird das Verdüsungsschutzkolloid b) in einer Gesamtmenge von 3 bis 30 Gew.-%, bezogen auf die polymeren Bestandteile der wässrigen Polymerdispersion, eingesetzt; bevorzugt werden 5 bis 20 Gew.-% bezogen auf den Polymeranteil eingesetzt. Bevorzugt werden teilverseifte Polyvinylalkohole mit einem Hydrolysegrad von 80 bis 95 Mol-% und einer Höpplerviskosität, in 4 %-iger wassriger Lösung von 1 bis 30 mPas (Methode nach Höppler bei 20°C, DIN 53015) eingesetzt. In einer weiteren bevorzugten Ausführungsform werden keine weiteren Schutzkolloide als Polyvinylalkohole als Verdüsungshilfe eingesetzt.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die Polyvinylacetal-gepfropften Polymerisate können in Form deren wässrigen Dispersionen oder in Wasser redispergierbaren Pulver in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas. Insbesondere für die Herstellung von Bauklebern wie Fliesenkleber und Vollwärmeschutzkleber, sowie von Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel, oder als Beschichtungsmittel oder Bindemittel für Textilien, Fasermaterialien und Papier.

Die nachfolgenden Beispiele dienen der weiteren Erläuterung der Erfindung:
Polyvinylacetal 1
   Aus einem Polyvinylalkohol mit einem Hydrolysegrad von 98 Mol-% und einer Höpplerviskosität, in 4 %-iger wässriger Lösung von 2 mPas (Methode nach Höppler bei 20°C, DIN 53015) und Butyraldehyd wurde ein Polyvinylbutyral mit einem Acetalisierungsgrad von 11 Mol-% und 89 Mol-% Vinylalkoholeinheiten hergestellt.
Polyvinylacetal 2
   Aus einem Polyvinylalkohol mit einem Hydrolysegrad von 98 Mol-% und einer Höpplerviskosität von 3 mPas und Butyraldehyd wurde ein Polyvinylbutyral mit einem Acetalisierungsgrad von 11 Mol-% und 89 Mol-% Vinylalkoholeinheiten hergestellt.
Polyvinylacetal 3
   Aus einem Polyvinylalkohol mit einem Hydrolysegrad von 98 Mol-% und einer Höpplerviskosität von 4 mPas und Butyraldehyd wurde ein Polyvinylbutyral mit einem Acetalisierungsgrad von 11 Mol-% und 89 Mol-% Vinylalkoholeinheiten hergestellt.
Polyvinylacetal 4
   Aus einem Polyvinylalkohol mit einem Hydrolysegrad von 98 Mol-% und einer Höpplerviskosität von 2 mPas und Hexanal wurde ein Polyvinylhexanal mit einem Acetalisierungsgrad von 11 Mol-% und 89 Mol-% Vinylalkoholeinheiten hergestellt.
Polyvinylacetal 5
   Aus einem Polyvinylalkohol mit einem Hydrolysegrad von 98 Mol-% und einer Höpplerviskosität von 2 mPas und Acetaldehyd wurde ein Polyvinylacetal mit einem Acetalisierungsgrad von 15 Mol-% und 85 Mol-% Vinylalkoholeinheiten hergestellt.

### Beispiel 1:

### Emulsionspolymerisation mit Polyvinylacetal 1

In ein Polymerisationsgefäß wurden 180 g Wasser, 381 g Polyvinylacetal 1 (14 %-ige wässrige Lösung), 107 g VeoVa10 und 427 g Vinylacetat vorgelegt. Diese Voremulsion wurde auf einen pH-Wert von 7.0 eingstellt und auf 50°C erwärmt. Zum Starten der Polymerisation wurden t-Butylhydroperoxid (0.2 %-ige wässrige Lösung) und Na-Formaldehydsulfoxylat (0.3 %-ige wässrige Lösung) mit je 3 g/h zudosiert. Die Temperatur wurde durch Kühlung auf 65°C gehalten. 30 min nach Beginn der Reaktion wurde mit der Dosierung von 107 g VeoVa10 , 427 g Vinylacetat und 381 g Polyvinylacetal 1 und 57 g Wasser begonnen. Diese Mengen wurden innerhalb 3 h zudosiert. Anschließend wurde noch eine Stunde nachpolymerisiert und abgekühlt. Die fertige Dispersion wurde auf einen pH-Wert von ca. 7 eingestellt. Die Dispersion hatte eine Festgehalt von 48.6 % und eine Viskosität von 83 mPas.

Nach Zusatz von 5 Gew.-% (fest/fest) eines Polyvinylalkohols mit einem Hydrolysegrad von 88 Mol-% und einer Viskosität nach Höppler von 4 mPas wurde die Dispersion in bekannter Weise zu einem Pulver versprüht. Das erhaltene Pulver war gut rieselfähig, gut redispergierbar und blockstabil.

### Beispiel 2:

### Emulsionspolymerisation mit Polyvinylacetal 1

Analog Beispiel 1 wurden Vinylacetat und VeoVa10 in Gegenwart von Ethylen in einem Druckautoklaven polymerisiert. Der Ethylengehalt im Mischpolymerisat betrug ca. 8 Gew.-%.

Die Dispersion hatte eine Festgehalt von 54.7% und eine Viskosität von 305 mPas. Die Dispersion wurde analog Beispiel 1 versprüht, und es wurde ein rieselfähiges, redispergierbares und blockstabiles Pulver erhalten.

### Beispiel 3:

### Emulsionspolymerisation mit Polyvinylacetal 2

Analog Beispiel 1 wurde eine Dispersion mit Polyvinylacetal 2 hergestellt. Die Dispersion hatte eine Festgehalt von 54.0 % und eine Viskosität von 890 mPas. Die Dispersion wurde analog Beispiel 1 versprüht, und es wurde ein rieselfähiges, redispergierbares und blockstabiles Pulver erhalten.

### Beispiel 4:

### Emulsionspolymerisation mit Polyvinylacetal 3

Analog Beispiel 1 wurde eine Dispersion mit Polyvinylacetal 3 hergestellt. Die Dispersion hatte eine Festgehalt von 50.5 % und eine Viskosität von 955 mPas. Die Dispersion wurde analog Beispiel 1 versprüht, und es wurde ein rieselfähiges, redispergierbares und blockstabiles Pulver erhalten.

### Beispiel 5:

### Emulsionspolymerisation mit Polyvinylacetal 4

Analog Beispiel 1 wurde eine Dispersion mit Polyvinylacetal 4 hergestellt. Die Dispersion hatte eine Festgehalt von 43.5 % und eine Viskosität von 2400 mPas. Die Dispersion wurde analog Beispiel 1 versprüht, und es wurde ein rieselfähiges, redispergierbares und blockstabiles Pulver erhalten.

### Vergleichsbeispiel 6:

### Emulsionspolymerisation mit Polyvinylacetal 5

Analog Beispiel 1 wurde mit Polyvinylacetal 5 als Schutzkolloid polymerisiert. Die Dispersion koagulierte.

### Vergleichsbeispiel 7:

### Emulsionspolymerisation mit Polyvinylacetal 1

Analog Beispiel 1 wurde eine Dispersion mit Polyvinylacetal 1 hergestellt. Der pH-Wert wurde vor der Polymerisation nicht eingestellt und betrug 4.2. Die Dispersion koagulierte.

### Vergleichsbeispiel 8:

### Emulsionspolymerisation mit Polyvinylalkohol

Analog der Vorgehensweise in Beispiel 2 wurden Vinylacetat und Ethylen in einem Gewichtsverhältnis von 93 : 7 polymerisiert. Anstelle eines Polyvinylacetal-Schutzkolloids wurden zur Stabilisierung 8 Gew.-%, bezogen auf Vinylacetat, eines Polyvinylalkohols mit einem Hydrolysegrad von 88 Mol-% und einer Viskosität nach Höppler von 4 mPas verwendet. Die Dispersion wurde analog Beispiel 1 versprüht, und es wurde ein rieselfähiges, redispergierbares und blockstabiles Pulver erhalten.

### Vergleichsbeispiel 9:

### Emulsionspolymerisation mit Polyvinylalkohol

Analog der Vorgehensweise in Beispiel 1 wurden Vinylacetat und VeoVa10 in einem Gewichtsverhältnis von 80 : 20, in Gegenwart eines Polyvinylalkohols mit einem Hydrolysegrad von 88 Mol-% und einer Viskosität nach Höppler von 4 mPas polymerisiert. Die Dispersion wurde analog Beispiel 1 versprüht, und es wurde ein rieselfähiges, redispergierbares und blockstabiles Pulver erhalten.

### Vergleichsbeispiel 10:

### Emulsionspolymerisation mit Polyvinylalkohol, Sprühtrocknung mit Polyyinylbutyral.

Analog der Vorgehensweise in Beispiel 1 wurden Vinylacetat und VeoVa10 in einem Gewichtsverhältnis von 80 : 20, aber in Gegenwart eines Polyvinylalkohols mit einem Hydrolysegrad von 88 Mol-% und einer Viskosität nach Höppler von 4 mPas polymerisiert. Die Dispersion wurde analog Beispiel 1 versprüht, wobei als Verdüsungsschutzkolloid das Polyvinylacetal 1 eingesetzt wurde. Es wurde ein rieselfähiges, redispergierbares und blockstabiles Pulver erhalten.

### Bestimmung der Zementstabilität:

Es wurde eine Zementmischung der nachfolgenden Rezeptur angerührt:

| | |
|---|---|
| Portlandzement | 82.5 g |
| Calcit (CaCO₃) 10-40 µm | 75 g |
| Quarzsand 200-500 µm | 142 g |
| Dispersion (Pulver) | 29(15) g |
| Wasser | 100 g |

Es wurde die Viskosität dieser Mischung direkt nach Anrühren V₀ und nach 60 min V₆₀ bestimmt. Der Quotient V₆₀/V₀ ist ein Maß für die Viskositätszunahme und für die Zementstabilität. Der Wert wird mit 100 multipliziert und als %-Wert angegeben.

Die Prüfergebnisse sind in Tabelle 1 zusammengefasst. Die erfindungsgemäße Vorgehensweise führt durchweg zu zementstabilen Polymerisaten. Die Zementstabilität ist besser als bei vergleichbaren Polyvinylalkohol-stabilisierten Pulvern (Vergleichsbeispiele 8-10) wie sie traditionell eingesetzt werden.

**Tabelle 1:**

| Beispiel | Zementstabilität % |
|---|---|
| Bsp. 1 | 142 |
| Bsp. 2 | 130 |
| Bsp. 3 | 143 |
| Bsp. 4 | 137 |
| Bsp. 5 | 132 |
| Vbsp. 6 | koaguliert |
| Vbsp. 7 | koaguliert |
| Vbsp. 8 | 163 |
| Vbsp. 9 | 157 |
| Vbsp. 10 | 165 |

## Patentansprüche

1. Polyvinylacetal-gepfropfte Polymerisate in Form deren wässrigen Dispersionen oder in Wasser redispergierbaren Pulver auf der Basis von Emulsions-oder Suspensionspolymerisaten von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren, welche mit Polyvinylacetalen mit 0 bis 5.0 Mol-% Vinylacetateinheiten, 75 bis 95 Mol-% Vinylalkoholeinheiten, 0.1 bis 20 Mol-% Acetaleinheiten, welche sich von Aldehyden mit 3 bis 7 C-Atomen ableiten, gepfropft sind.

2. Polyvinylacetal-gepfropfte Polymerisate gemäß Anspruch 1, auf der Basis von einem oder mehreren Monomeren aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol.

3. Polyvinylacetal-gepfropfte Polymerisate gemäß Anspruch 1 oder 2, **dadurch gekennzeichnet, dass** als Polyvinylacetale teilacetalisierte Polyvinylalkohole aufgepfropft sind, mit 80 bis 98 Mol-% Vinylalkoholeinheiten, und 10 bis 20 Mol-% Acetaleinheiten, welche sich jeweils von Aldehyden mit 3 bis 7 C-Atomen oder Gemischen dieser Aldehyde untereinander oder Gemische dieser Aldehyde mit Acetaldehyd ableiten.

4. Verfahren zur Herstellung von Polyvinylacetal-gepfropften Polymerisaten in Form deren wässrigen Dispersionen oder in Wasser redispergierbaren Pulver mittels radikalisch initiierter Emulsions- oder Suspensionspolymerisation in wässrigem Medium von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomere in Gegenwart von einem oder mehreren Schutzkolloiden a) und gegebenenfalls Trocknung der damit erhaltenen Polymerdispersionen in Gegenwart von einem oder mehreren Verdüsungsschutzkölloiden b), wobei die Polymerisation bei einem pH-Wert von 5 bis 8 durchgeführt wird, und als Schutzkolloide a) teilacetalisierte Polyvinylalkohole eingesetzt werden mit 0 bis 5.0 Mol-% Vinylacetateinheiten, 75 bis 99 Mol-% Vinylalkoholeinheiten, 0.1 bis 20 Mol-% Acetaleinheiten, welche sich von Aldehyden mit 3 bis 7 C-Atomen ableiten, und mit einer Viskosität des zugrundeliegenden Polyvinylalkohols von 2 bis 30 mPas, und als Verdüsungsschutzkolloide b) von a) verschiedene Schutzkolloide eingesetzt werden.

5. Verfahren nach Anspruch 4, **dadurch gekennzeichnet, dass** als Verdüsungsschutzkolloide b) ein oder mehrere aus der Gruppe umfassend teilverseifte Polyvinylalkohole, Polyvinylpyrrolidone, Polysaccharide, Cellulosen und deren Carboxymethyl-, Methyl-, Hydroxyethyl-, Hydroxypropyl-Derivate, Proteine, Sojaprotein, Gelatine, Ligninsulfonate, Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere, Melaminformaldehydsulfonate, Naphthalinformaldehydsulfonate, Styrolmaleinsäure- und Vinylethermaleinsäure-Copolymere eingesetzt werden.

6. Verfahren nach Anspruch 4 oder 5, **dadurch gekennzeichnet, dass** der Anteil an Schutzkolloid a) vollständig vorgelegt wird, oder teilweise vorgelegt und teilweise zudosiert wird.

7. Verfahren nach Anspruch 5, **dadurch gekennzeichnet, dass** als Verdüsungsschutzkolloid b) teilverseifte Polyvinylalkohole mit einem Hydrolysegrad von 80 bis 95 Mol-% und einer Höpplerviskosität, in 4 %-iger wässriger Lösung von 1 bis 30 mPas eingesetzt werden.

8. Verwendung der Polyvinylacetal-gepfropften Polymerisaten gemäss Anspruch 1 bis 3 in Form deren wässrigen Dispersionen oder in Wasser redispergierbaren Pulver als Rezepturbestandteil, gegebenenfalls in Verbindung mit anorganischen, hydraulisch abbindenden Bindemitteln in Bauklebern, Putzen, Spachtelmassen, Fußbodenspachtelmassen, Verlaufsmassen, Dichtschlämmen, Fugenmörtel und Farben.

9. Verwendung der Polyvinylacetal-gepfropften Polymerisaten gemäss Anspruch 1 bis 3 als Bindemittel für Beschichtungsmittel, Farben und Klebemittel.

10. Verwendung der Polyvinylacetal-gepfropften Polymerisaten gemäß Anspruch 1 bis 3 als Beschichtungs- und Bindemittel für Textilien und Papier.

11. Verwendung gemäß Anspruch 8 in Fliesenkleber und Vollwärmeschutzkleber.

## Claims

1. Polyvinylacetal-grafted polymers in the form of their aqueous dispersions or water-redispersible powders based on emulsion or suspension polymers of one or more monomers from the group consisting of vinyl esters, (meth)acrylates, vinylaromatics, olefins, 1,3-dienes and vinyl halides and, if required, further monomers copolymerizable therewith, which are grafted with polyvinylacetals having from 0 to 5.0 mol % of vinyl acetate units, from 75 to 95 mol % of vinyl alcohol units and from 0.1 to 20 mol % of acetal units which are derived from aldehydes having 3 to 7 C atoms.

2. Polyvinylacetal-grafted polymers according to Claim 1, based on one or more monomers from the group consisting of vinyl acetate, vinyl esters of α-branched monocarboxylic acids having 9 to 11 C atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate and styrene.

3. Polyvinylacetal-grafted polymers according to Claim 1 or 2, **characterized in that** the polyvinylacetals grafted on are partially acetalated polyvinyl alcohols having from 80 to 98 mol % of vinyl alcohol units and from 10 to 20 mol % of acetal units which are derived in each case from aldehydes having 3 to 7 C atoms or mixtures of these aldehydes with one another or mixtures of these aldehydes with acetaldehyde.

4. Process for the preparation of polyvinylacetal-grafted polymers in the form of their aqueous dispersions or water-redispersible powders by means of free radical emulsion or suspension polymerization in an aqueous medium of one or more monomers from the group consisting of vinyl esters, (meth)acrylates, vinylaromatics, olefins, 1,3-dienes and vinyl halides and, if required, further monomers copolymerizable therewith, in the presence of one or more protective colloids a) and, if required, drying of the polymer dispersions obtained thereby in the presence of one or more protective colloids b) for spraying, the polymerization being carried out at a pH of from 5 to 8, and partially acetalated polyvinyl alcohols having from 0 to 5.0 mol % of vinyl acetate units, from 75 to 99 mol % of vinyl alcohol units and from 0.1 to 20 mol % of acetal units derived from acetaldehyde having 3 to 7 C atoms, and where the parent polyvinyl alcohol has a viscosity of from 2 to 30 mPa.s, being used as protective colloids a) and protective colloids differing from a) being used as protective colloids b) for spraying.

5. Process according to Claim 4, **characterized in that** the protective colloids b) which are used for spraying are one or more from the group consisting of partially hydrolysed polyvinyl alcohols, polyvinylpyrrolidones, polysaccharides, celluloses and their carboxymethyl, methyl, hydroxyethyl and hydroxypropyl derivatives, proteins, soya bean protein, gelatin, ligninsulphonates, poly(meth)-acrylic acid, copolymers of (meth)acrylates with comonomer units having carboxyl functional groups, poly(meth)acrylamide, polyvinylsulphonic acids and their water-soluble copolymers, melamine formaldehyde sulphonates, naphthalene formaldehyde sulphonates and styrene/maleic acid and vinyl ether/maleic acid copolymers.

6. Process according to Claim 4 or 5, **characterized in that** the amount of protective colloid a) is completely initially introduced or is partly initially introduced and partly metered in.

7. Process according to Claim 5, **characterized in that** the protective colloid b) used for spraying are partially hydrolysed polyvinyl alcohols having a degree of hydrolysis of from 80 to 95 mol % and a Höppler viscosity, in 4% strength aqueous solution, of from 1 to 30 mPa.s.

8. Use of the polyvinylacetal-grafted polymers according to any of Claims 1 to 3 in the form of their aqueous dispersions or water-redispersible powders as a component of a formulation, if required in combination with inorganic, hydraulically setting binders in construction adhesives, renders, filling compounds, floor filling compounds, levelling compounds, sealing slurries, joint mortars and paints.

9. Use of the polyvinylacetal-grafted polymers according to any of Claims 1 to 3 as binders for coating materials, paints and adhesives.

10. Use of the polyvinylacetal-grafted polymers according to any of Claims 1 to 3 as a coating materials or binders for textiles and paper.

11. Use according to Claim 8 in tile cement and heat-insulating adhesive.

## Revendications

1. Polymères greffés par polyvinylacétal sous forme de leurs dispersions aqueuses ou de poudres redispersibles dans l'eau à base de polymères en émulsion ou en suspension d'un ou de plusieurs monomères du groupe comprenant les esters de vinyle, les esters de l'acide (méth)acrylique, les aromatiques de vinyle, les oléfines, les 1,3-diènes et les halogénures de vinyle et le cas échéant d'autres monomères copolymérisables avec ceux-ci, qui sont greffés avec des polyvinylacétals comprenant 0 à 5,0% en mole d'unités acétate de vinyle, 75 à 95% en mole d'unités alcool vinylique, 0,1 à 20% en mole d'unités acétal, qui sont dérivées d'aldéhydes présentant 3 à 7 atomes de carbone.

2. Polymères greffés par polyvinylacétal selon la revendication 1 à base d'un ou de plusieurs monomères du groupe comprenant l'acétate de - vinyle, les esters vinyliques d'acides monocarboxyliques ramifiés en position α comprenant 9 à 11 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène.

3. Polymères greffés par polyvinylacétal selon la revendication 1 ou 2, **caractérisés en ce que** des poly(alcools vinyliques) partiellement acétalisés sont greffés en tant que polyvinylacétals, avec 80 à 98% en mole d'unités alcool vinylique et 10 à 20% en mole d'unités acétal, qui sont à chaque fois dérivées d'aldéhydes comprenant 3 à 7 atomes de carbone ou de mélanges de ces aldéhydes les uns avec les autres ou de mélanges de ces aldéhydes avec de l'acétaldéhyde.

4. Procédé pour la préparation de polymères greffés par polyvinylacétal sous forme de leurs dispersions aqueuses ou de poudres redispersibles dans l'eau par polymérisation initiée par des radicaux dans une émulsion ou une suspension en milieu aqueux d'un ou de plusieurs monomères du groupe comprenant les esters de vinyle, les esters de l'acide (méth)acrylique, les aromatiques de vinyle, les oléfines, le 1,3-diènes et les halogénures de vinyle et le cas échéant d'autres monomères copolymérisables avec ceux-ci en présence d'un ou de plusieurs colloïdes de protection a) et le cas échéant séchage des dispersions polymères ainsi obtenues en présence d'un ou de plusieurs colloïdes de protection à pulvériser b), la polymérisation étant réalisée à un pH de 5 à 8, en utilisant comme colloïdes de protection a) des poly(alcools vinyliques) partiellement acétalisés avec 0 à 5,0% en mole d'unités acétate de vinyle, 75 à 99% en mole d'unités alcool vinylique, 0,1 à 20% en mole d'unités acétal qui sont dérivées d'aldéhydes comprenant 3 à 7 atomes de carbone et avec une viscosité du poly(alcool vinylique) de base de 2 à 30 mPa.s, et comme colloïdes de protection à pulvériser b) des colloïdes de protection différents de a).

5. Procédé selon la revendication 4, **caractérisé en ce qu'**on utilise comme colloïdes de protection à pulvériser b) un ou plusieurs du groupe comprenant les poly(alcools vinyliques) partiellement saponifiés, les polyvinylpyrrolidones, les polysaccharides, les celluloses et leurs dérivés carboxyméthyle, méthyle, hydroxyéthyle, hydroxypropyle, les protéines, les protéines de soja, les gélatines, les ligninesulfonates, les poly(acides (méth)acryliques), les copolymères de (méth)acrylates avec des unités comonomères à fonctionnalité carboxyle, le poly(méth)acrylamide, les poly(acides sulfoniques) et leurs copolymères solubles dans l'eau, les mélamineformaldéhydesulfonates, les naphtaléineformaldéhydesulfonates, les copolymères de styrène et d'acide maléique et les copolymères de vinyléther et d'acide maléique.

6. Procédé selon la revendication 4 ou 5, **caractérisé en ce que** la proportion en colloïde de protection a) est disposée au préalable dans sa totalité ou est disposée partiellement et ajoutée partiellement en dosant.

7. Procédé selon la revendication 5, **caractérisé en ce qu'**on utilise comme colloïde de protection à pulvériser b) des poly(alcools vinyliques) partiellement saponifiés avec un degré d'hydrolyse de 80 à 95% en mole et une viscosité de Höppler dans une solution aqueuse à 4% de 1 à 30 mPa.s.

8. Utilisation des polymères greffés par polyacétal selon la revendication 1 à 3 sous forme de leurs dispersions aqueuses ou de poudres redispersibles dans l'eau comme constituants d'une formulation, le cas échéant en association avec des liants inorganiques, hydrauliques dans des colles, des enduits, des mastics, des bouche-pores pour sols, des masses d'écoulement, des badigeons d'étanchéité, des mortiers pour joints et des teintures.

9. Utilisation des polymères greffés par polyacétal selon la revendication 1 à 3 comme liants pour des agents de revêtement, des teintures et des colles.

10. Utilisation des polymères greffés par polyacétal selon la revendication 1 à 3 comme agent de revêtement et liant pour textiles et papier.

11. Utilisation selon la revendication 8 dans les colles pour carreaux et les colles pour isolants thermiques.
